# EUROPEAN PATENT SPECIFICATION

(11) **EP 1 943 633 B1**
(45) Date of publication and mention of the grant of the patent: **19.12.2012**
(21) Application number: 06794147.6
(22) Date of filing: 05.10.2006
(51) Int. Cl.: G09F 13/20, G09F 13/22, E04F 15/02, E04F 13/08, C09K 11/00

(54) **PATHWAY MARKER, ESPECIALLY FIRE ESCAPE MARKER IN A FLOOR OR WALL**
WEGMARKIERUNG, INSBESONDERE FEUERAUSGANG-MARKIERUNG IN EINEM BODEN ODER IN EINER WAND
INDICATEUR DE DIRECTION, SPÉCIALEMENT INDICATEUR DE SORTIE DE SECOURS SUR LE SOL OU SUR UN MUR

(30) Priority: 06.10.2005 FI 20055539
(43) Date of publication of application: 16.07.2008
(73) Proprietor: Parkkari, Jorma, 06100 Porvoo (FI)
(72) Inventor: Parkkari, Jorma, 06100 Porvoo (FI)
(74) Representative: LEITZINGER OY
(86) International application number: PCT/FI2006/050430
(87) International publication number: WO 2007/039673

(56) References cited:
- GB-A- 2 147 542
- GB-A- 2 328 064
- JP-A- 2004 163 621
- JP-A- 2004 287 402
- SE-C2- 514 321
- US-A- 5 714 255
- US-A1- 2003 215 596
- US-B1- 6 237 266

## Description

The invention relates to a pathway marker, especially a fire escape route marker in a floor or wall, comprising a self-luminescent pathway marker and a substrate layer, which is underlaid with the pathway marker or which substrate layer constitutes the self-luminescent pathway marker.

The publication WO 9857315 discloses a tile type building material, having incorporated therein a guide or the like informational pattern of a self-luminescent or fluorescent material. The application publication US-2003/215596 also discloses a floor tile provided with a self-luminescent pathway marking. A drawback in these prior known solutions is that such indicia are aesthetically disturbing and, thus, have not gained widespread popularity.

The publication US 2003/0215596 A1 discloses a pathway marker, wherein a photoluminescent material is disbursed within a tile base and these tiles are used to provide a marker blending into surroundings under normal lighting. A problem is how to apply the manufacturing method to all various types of building materials. Another problem is that in lighted or illuminated conditions the pathway marker does not have a capability of providing a figure in desired colour or shape.

GB-2 328 064 A shows a pathway marker comprising a strip of photoluminescent material which is covered with a masking strip. The masking strip is provided with holes to leave visible areas of the photoluminescent strip. The masking strip is of non-transparent material such as metal or wood in order to give more aesthetic appearance than the strip of photoluminescent material.

US 6 237 266 B1 shows an evacuation route indicator which includes a carpeted strip having direction indicating indicia formed thereon. The indicia include photoluminescent material. The indicia may be formed of filaments embroidered over light reflective material in the shape of indicia.

It is an object of the invention to provide an improved pathway marker, which in lighted or illuminated conditions is visible as a figure in desired colour or shape or, if desired, is nearly imperceptible in the most diverse of floor or wall surfaces.

This object is accomplished by the invention in such a way that the substrate layer is transparent glass, plastics or resin and is overlaid with
- a raster or line pattern partially concealing the pathway marker, the self-luminescent pathway marker being partially visible through the pattern, or
- a skin concealing the pathway marker and having been treated to be partially transmissive to light or scattering light, the skin treatment partially blocking or screening visual perception of a photoluminescent material in lighted or illuminated conditions.

In normal lighting, the raster or line pattern or the skin provides an ambience-blending figure, but in the dark the pathway markers are clearly visible through the raster or line pattern or the skin. As desired, the raster or line pattern or the skin may provide an intentionally distinctive strip, but in the dark the pathway marker visible from under the raster pattern provides a guiding line and/or a sequence of arrows or some other pathway marker highly visible on a floor or wall.

The dependent claims disclose preferred embodiments of the invention. The invention will now be described in more detail by way of exemplary embodiments with reference to the accompanying drawings, in which
- Fig. 1: is a sectional view of a tile, which is useful as a floor or wall surface and which carries a pathway marker according to one embodiment of the invention;
- Fig. 2: is a sectional view of a tile, which carries a pathway marker according to a second embodiment of the invention;
- Fig. 3: is a plan view of a raster pattern according to one embodiment of the invention;
- Fig. 4: shows a raster pattern of another embodiment, which imitates the surface appearance of a surrounding tile; and
- Figs. 5 and 6: are further sectional views of tiles provided with pathway markers according to feasible embodiments of the invention.

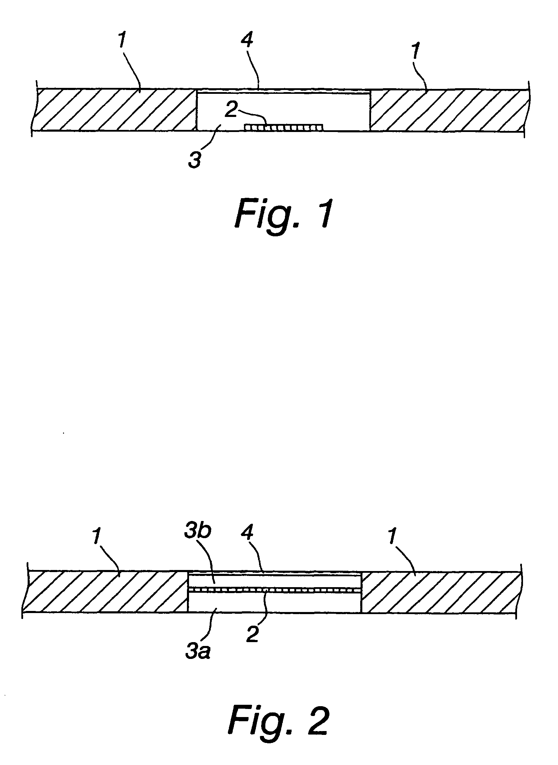

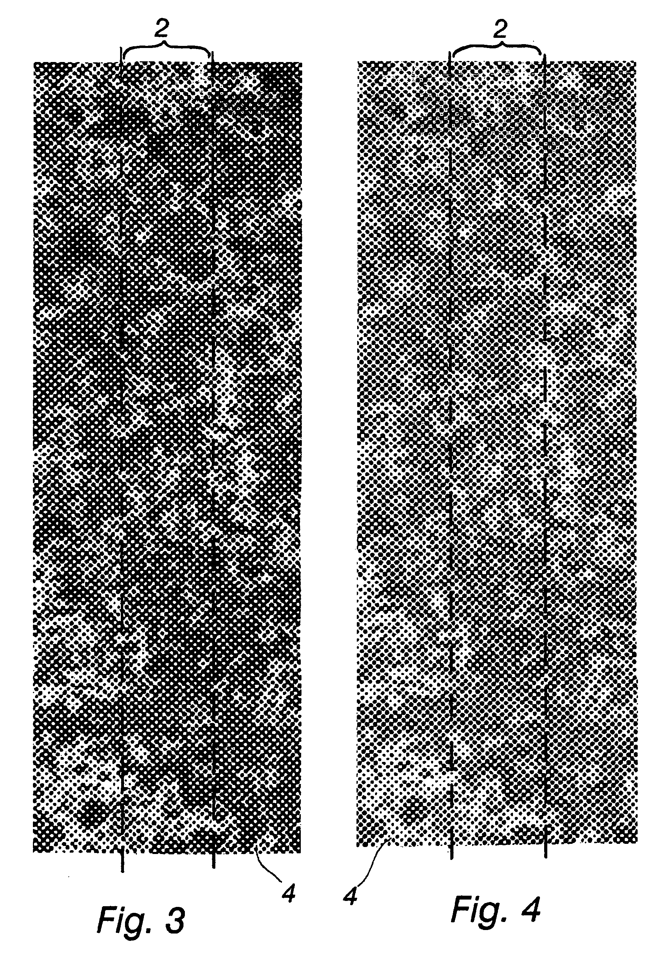

In the example of fig. 1, a floor or wall skin layer 1, e.g. a tile floor 1, has been cut for an opening which is elongated in the direction normal to the drawing's plane. The opening is fitted with a panel 3 of glass or plastics, having a recess in its bottom surface provided with a pathway marker 2 of a self-luminescent material (photoluminescent material). The pathway marker 2 can be a long line running from tile to tile, including directional arrow points at appropriate distances. The pathway marker 2 may also consist of arrows appropriately spaced in individual tiles. The panel 3 has its top surface formed, e.g. by a silk screen printing method, with a raster pattern 4 imitating the appearance of the tile's 1 surface or being otherwise as desired. Figs. 3 and 4 illustrate examples of raster patterns, imitating the skin of lithic tiles. The raster pattern 4 can be any figure in desired colour and shape, which is visible in luminous conditions yet disappears in the dark, thus visualizing a pathway marker partially concealed by the raster pattern.

As a raster pattern is pressed by a silk screen printing method with an enamel material to glass surface, the pattern can be fired in a kiln for a wear-resistant skin functional as part of a floor surface. The pathway marker 2 can also be located at the substrate layer's 3 top surface, directly under the raster pattern 4. The substrate layer 3 does not necessarily require a recess for the pathway marker 2. The pathway marker 2 can be e.g. an adhesive tape of a self-luminescent material or coated with a self-luminescent material, which is fastened to the substrate layer's 3 surface. The pathway marker 2 can also be made of a 2-component compound, typically as a layer of about 0,5-2 mm in thickness, which does not necessarily require a recess in the substrate layer 3.

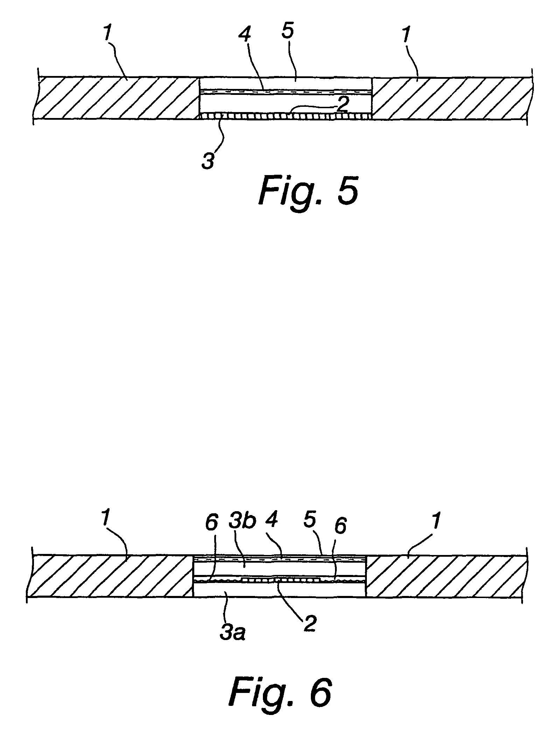

Fig. 2 illustrates an alternative solution, which differs from the former in the sense that the substrate layer 3 consists of two superimposed sheets 3a, 3b, the pathway marker 2 being fitted therebetween. The pathway marker 2 extends across the entire width of the substrate layer 3, which is the case also in fig. 5.

In the exemplary embodiments of figs. 5 and 6, the raster pattern 4 is further covered with a protective skin 5 that can be of glass, plastics or resin. In this case, the raster pattern 4 may be pressed to a plastic film accommodated between the sheets 3 and 5. Most preferably, however, the raster pattern is pressed directly to the sheet's 3a, 3b top surface which is substantially coplanar with the tile layer's 1 outer surface. Thus, there will be no extra glossy surface layer 5, the surface being as uniform as possible. Hence, the sheets 3 and 5 constitute a supporting substrate layer both for the pathway marker 2 and the raster pattern 4.

The example of fig. 6 differs from fig. 5 in the sense that the pathway marker 2 is accommodated between a stiff transparent panel 3b and a base panel 3a, the former being included in the substrate layer. The base panel 3a need not be transparent and it can also be a part of the tile 1, the inventive pathway marker being accommodated in a recess present in the tile 1. This is possible in other exemplary embodiments as well. Alongside the pathway marker 2, on one or either side thereof, is a reflector surface 6 which is also located under the raster pattern 4. The reflector 6 enhances the visual perception of a pathway marker, when illuminated e.g. with a flashlight or in the event that the space has been in darkness for a long time and the self-luminescent ability of the directional marking has decayed accordingly. The reflector surface can be used in other exemplary embodiments as well.

The pathway marker 2, along with its substrate layers 3, 5 and raster pattern 4 and possible base panel 3a, may constitute a sandwich structure equal in thickness to the floor or wall tile 1. This sandwich structure may be assembled for an integral block. The block can also be installable in an opening or recess cut in the tile 1. Optionally, the substrate sandwich structure can be made at least partially by in-situ casting, e.g. of resin. Feasible as the substrate layer sheets 3, 3a, 3b, 5 is polycarbonate panel and/or tempered glass. The substrate layer and the pathway marker can also be combined, e.g. by having a photoluminescent material disbursed within the material of a building tile, whereby the tile is glowing as a whole. The overlaid raster pattern 4 provides a marker visible in lighted or illuminated conditions.

The foregoing description deals with the invention in reference to floors or walls clad with tiles, such as lithic tiles. Other patterned surface material may also be relevant, for example parquet or board in floors or panel or wallpaper in walls.

In the drawings, the raster pattern 4 has its thickness exaggerated for the sake of clarity. The raster pattern 4 has its dots, lines or pixels in other shapes, which make up a desired figure, concealing 20-80%, preferably 40-60% of the pathway marker's area. Thus, in lighted or illuminated conditions, it is possible to provide any desired surface pattern, including a pathway marker or an interior ornament which disappears in the dark, and the pathway marker, which may be a figure as well, emerges as a glowing colour.

A raster pattern is economically viable and good for various applications. In some cases, the same object of the invention is also achieved by a second embodiment of the invention, in which the substrate layer is covered by a pathway-marker concealing skin treated for partially transmitting light (to be partially translucent) or for scattering light and blocking the visual perception of a photoluminescent material in lighted or illuminated conditions. A partially light transmitting or translucent skin can be made e.g. from a thin, semi-translucent colour membrane. A light scattering skin is obtained by using e.g. a sand-blasted glass surface or some other transparent material layer with its surface roughened for scattering of light.

The invention can be applied e.g. in marking systems for exit routes and fire escapes. The invention has its functionality based on having a partially translucent skin pattern. Consequently, a post-luminescent material in the bottom part of a body absorbs energy in itself, releasing it in the dark as glowing light. The skin pattern can be produced by various raster patterns that can be regular or irregular, mono- or polychromatic and have a translucency that can be regulated as desired.

By using the raster or line pattern or the translucent skin it is possible to create desired architectural patterns. In many buildings it is desired that the raster or line pattern or the translucent skin is adapted according to appearance of the surrounding surface pattern, preferably by imitating one or more characteristic feature of the appearance of the surrounding surface. In the latter case, the image of the raster or line pattern or the skin would resemble, at least to some extend, the image of the surrounding surface.

## Claims

1. A pathway marker, comprising a self-luminescent pathway marker (2) and a substrate layer (3, 5), which is underlaid with the pathway marker or which substrate layer (3, 5) constitutes the self-luminescent pathway marker (2), **characterized in that** the substrate layer (3, 5) is transparent glass, plastics resin and is overlaid with
- a raster or line pattern (4) partially concealing the pathway marker, the self-luminescent pathway marker (2) being partially visible through the pattern, or
- a skin concealing the pathway marker and having been treated to be partially transmissive to light or scattering light, the skin treatment partially blocking or screening visual perception of a photoluminescent material in lighted or illuminated conditions.

2. A pathway marker as set forth in claim 1, **characterized in that** the raster or line pattern (4) or the skin provides the substrate layer's (3) top or outer skin serving as part of a floor or wall surface.

3. A pathway marker as set forth in claim 1 or 2, **characterized in that** the raster or line pattern (4) or the skin is pressed to the substrate layer's (3, 3b) skin by a silk screen printing method.

4. A pathway marker as set forth in any of claims 1-3, **characterized in that** the raster or line pattern (4) or the skin is pressed to the outer surface of a glass or plastic sheet included in the substrate layer (3, 5).

5. A pathway marker as set forth in claim 1, **characterized in that** the raster or line pattern (4) or the skin is pressed to a plastic film which is bonded to the substrate layer (3) or lies between the substrate layers (3, 5).

6. A pathway marker as set forth in any of claim 1-5, **characterized in that** the pathway marker (2) is accommodated in a recess present in a panel (3) included in the substrate layer.

7. A pathway marker as set forth in any of claims 1-6, **characterized in that** alongside the pathway marker (2) is a reflector surface (6) located under the raster or line pattern (4) or the skin.

8. A pathway marker as set forth in any of claims 1-3, **characterized in that** the substrate layer comprises a block of building material, and that the block material has a luminescent material disbursed therein.

9. A pathway marker as set forth in any of claims 1-8, **characterized in that** the pathway marker (2), along with its substrate layer (3, 5) and raster or iine pattern (4) or the skin, provides a sandwich structure having its thickness equal to that of a floor or wall tile (1).

10. A pathway marker as set forth in claim 9, **characterized in that** said sandwich structure is assembled for an integral block, which is installable in an opening cut in the tile (1) or which replaces a tile used as the surface layer of a floor or wall.

11. A pathway marker as set forth in claim 1 or 2, **characterized in that** the raster or line pattern (4) or the skin is adapted according to the appearance of the surrounding surface pattern

12. A pathway marker as set forth in any of claims 1-11, **characterized in that** the pathway marker is a fire escape route marker in a floor or wall.

## Patentansprüche

1. Wegmarkierung, umfassend eine selbstleuchtende Wegmarkierung (2) und eine Substratschicht (3, 5), welche mit der Wegmarkierung unterlegt ist, oder wobei die Substratschicht (3, 5) die selbstleuchtende Wegmarkierung (2) bildet,
**dadurch gekennzeichnet, dass** die Substratschicht (3, 5) transparentes Glas, transparenter Kunststoff oder transparentes Harz ist und überlagert ist mit
- einem Raster- oder Linienmuster (4), welches die Wegmarkierung teilweise verdeckt, wobei die selbstleuchtende Wegmarkierung (2) durch das Muster teilweise sichtbar ist, oder
- einer Haut, welche die Wegmarkierung verdeckt und behandelt wurde, um teilweise lichtdurchlässig oder lichtstreuend zu sein, wobei die Hautbehandlung die optische Wahrnehmung eines fotolumineszierenden Materials in beleuchteten oder erleuchteten Bedingungen teilweise blockiert oder abschirmt.

2. Wegmarkierung nach Anspruch 1, **dadurch gekennzeichnet, dass** das Raster- oder Linienmuster (4) oder die Haut die obere oder äußere Haut der Substratschicht (3) bildet, die als Teil einer Boden- oder Wandoberfläche dient.

3. Wegmarkierung nach Anspruch 1 oder 2, **dadurch gekennzeichnet, dass** das Raster- oder Linienmuster (4) oder die Haut mittels eines Siebdruckverfahrens auf die Haut der Substratschicht (3, 3b) gepresst wird.

4. Wegmarkierung nach einem beliebigen der Ansprüche 1-3, **dadurch gekennzeichnet, dass** das Raster- oder Linienmuster (4) oder die Haut auf die äußere Oberfläche einer Glas- oder Kunststoffplatte, die in der Substratschicht (3, 5) enthalten ist, gepresst sind.

5. Wegmarkierung nach Anspruch 1, **dadurch gekennzeichnet, dass** das Raster- oder Linienmuster (4) oder die Haut auf einen Kunststofffilm, der mit der Substratschicht (3) verbunden ist oder zwischen den Substratschichten (3, 5) angeordnet ist, gepresst ist.

6. Wegmarkierung nach einem beliebigen der Ansprüche 1-5, **dadurch gekennzeichnet, dass** die Wegmarkierung (2) in einer Ausnehmung untergebracht ist, welche in einer Platte (3), die in der Substratschicht enthalten ist, vorhanden ist.

7. Wegmarkierung nach einem beliebigen der Ansprüche 1-6, **dadurch gekennzeichnet, dass** entlang der Wegmarkierung (2) eine Reflektoroberfläche (6) ist, die unter dem Raster- oder Linienmuster (4) oder der Haut angeordnet ist.

8. Wegmarkierung nach einem beliebigen der Ansprüche 1-3, **dadurch gekennzeichnet, dass** die Substratschicht einen Block aus Baumaterial umfasst und dass das Blockmaterial ein darin verteiltes lumineszierendes Material aufweist.

9. Wegmarkierung nach einem beliebigen der Ansprüche 1-8, **dadurch gekennzeichnet, dass** die Wegmarkierung (2) gemeinsam mit ihrer Substratschicht (3, 5) und dem Raster- oder Linienmuster (4) oder der Haut eine Sandwichstruktur bildet, deren Dicke gleich jener einer Boden- oder Wandfliese (1) ist.

10. Wegmarkierung nach Anspruch 9, **dadurch gekennzeichnet, dass** die Sandwichstruktur für einen einstückigen Block zusammengebaut ist, welcher in einer Öffnung, die in die Fliese (1) geschnitten ist, angebracht werden kann oder welcher eine Fliese ersetzt, die als Oberflächenschicht eines Bodens oder einer Wand verwendet wird.

11. Wegmarkierung nach Anspruch 1 oder 2, **dadurch gekennzeichnet, dass** das Raster- oder Linienmuster (4) oder die Haut gemäß dem Aussehen des umliegenden Oberflächenmusters ausgebildet ist.

12. Wegmarkierung nach einem beliebigen der Ansprüche 1-11, **dadurch gekennzeichnet, dass** die Wegmarkierung eine Brandfluchtwegmarkierung in einem Boden oder einer Wand ist.

## Revendications

1. Marqueur de voie comprenant un marqueur de voie luminescent (2) et une couche de substrat (3, 5) superposée sur les marqueurs de voie, ou dans lequel la couche de substrat (3, 5) constitue le marqueur de voie luminescent (2),
**caractérisé en ce que**
la couche de substrat (3, 5) est constituée de verre transparent, de plastique ou de résine, et recouverte de :
- une grille ou un motif de lignes (4) dissimulant partiellement le marqueur de voie, le marqueur de voie luminescent (2) étant partiellement visible à travers le motif, ou
- une peau dissimulant le marqueur de voie, qui a été traitée de manière à transmettre partiellement la lumière ou la lumière diffuse, le traitement de la peau bloquant ou cachant partiellement la perception visuelle d'un matériau photo-luminescent, dans des conditions éclairées ou illuminées.

2. Marqueur de voie selon la revendication 1, **caractérisé en ce que** la grille ou le motif de lignes (4) ou encore la peau fournit la partie supérieure ou le revêtement extérieur de la couche de substrat (3), servant comme partie d'une surface de sol ou de mur.

3. Marqueur de voie selon la revendication 1 ou 2, **caractérisé en ce que** la grille ou le motif de lignes (4) ou encore la peau est pressé(e) sur la peau de la couche de substrat (3, 3b) par un procédé d'impression par sérigraphie.

4. Marqueur de voie selon l'une quelconque des revendications 1-3, **caractérisé en ce que** la grille ou le motif de lignes (4) ou encore la peau est pressé(e) sur la surface extérieure d'un verre ou d'un film plastique inclus dans la couche de substrat (3, 5).

5. Marqueur de voie selon la revendication 1, **caractérisé en ce que** la grille ou le motif de lignes (4) ou encore la peau est pressé(e) sur un film plastique collé sur la couche de substrat (3) ou situé entre les couches de substrat (3, 5).

6. Marqueur de voie selon l'une quelconque des revendications 1 à 5, **caractérisé en ce que** le marqueur de voie (2) est logé dans un renfoncement prévu dans un panneau (3) inclus dans la couche de substrat.

7. Marqueur de voie selon l'une quelconque des revendications 1 à 6, **caractérisé en ce qu'**une surface réfléchissante (6), située sous la grille ou le motif de lignes (4) ou encore la peau, est prévue le long du marqueur de voie (2).

8. Marqueur de voie selon l'une quelconque des revendications 1 à 3, **caractérisé en ce que** la couche de substrat comprend un bloc de matériau de construction, et **en ce que** le bloc de matériau de construction comporte un matériau luminescent dispersé dans celui-ci.

9. Marqueur de voie selon l'une quelconque des revendications 1 à 8, **caractérisé en ce que** le marqueur de voie (2), ensemble avec la couche de substrat (3, 5) et la grille ou le motif de lignes (4) ou encore la peau, fournit une structure en sandwich présentant une épaisseur égale à celle d'un carreau de sol ou de mur (1).

10. Marqueur de voie selon la revendication 9, **caractérisé en ce que** ladite structure en sandwich est assemblée pour former un bloc intégral, susceptible d'être monté dans une ouverture découpée dans le carreau (1) ou de remplacer un carreau utilisé comme couche de surface d'un sol ou d'un mur.

11. Marqueur de voie selon la revendication 1 ou 2, **caractérisé en ce que** la grille ou le motif de lignes (4) ou encore la peau est adapté(e) en fonction de l'apparence du motif de surface environnant.

12. Marqueur de voie selon l'une quelconque des revendications 1 à 11, **caractérisé en ce que** le marqueur de voie est un marqueur d'issue de secours dans un sol ou un mur.
